# EUROPEAN PATENT APPLICATION

(11) **EP 2 887 213 A1**
(43) Date of publication of application: **24.06.2015**
(21) Application number: 13306794.2
(22) Date of filing: 19.12.2013
(51) Int. Cl.: G06F 9/445, G06F 9/44

(54) **Method for transferring applicative data between two instances of an application**

(71) Applicant: Gemalto SA, 92190 Meudon (FR)
(72) Inventor: Aillaud, Christophe, 13705 La Ciotat (FR); Huyghe, Elise, 13705 La Ciotat (FR); Guichard, Olivier, 13705 La Ciotat (FR)

(57) **Abstract**

The invention is a method for transferring applicative data from an instance of an old package to another instance of a new package corresponding to an upgraded version of the old package. Each instance stores the applicative data using its own storage format. These instances are embedded in a secure element. The method comprises a step wherein the secure element receives a first command containing a script able to automatically convert the applicative data from a storage format into the other storage format, and a step wherein the secure element executes the script, updates the applicative data of the new instance and delete the old instance when a predefined event occurs.

## Description

### (Field of the invention)

The present invention relates to methods of transferring applicative data between two instances of an application. It relates particularly to methods of transferring applicative data between instances embedded in a secure element.

### (Background of the invention)

Secure elements are small devices comprising a memory, a processor and an operating system for computing treatments. Such secure elements may comprise a plurality of memories of different types, like nonvolatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards are a kind of secure elements.

A secure element may contain applications and their associated applicative data which encompass user data, file systems and secret keys. Such an application may be developed as a package which is stored into the secure element. One or several instances of the package application are then created as needed. Each instance owns, handles and stores its own applicative data.

Secure elements may be accessed by a remote server via a wireless channel or through a wired network, like Internet for instance. For example, secure elements which are intended to be used in Telecom domain or Machine-To-Machine (M2M) domain are able to manage an OTA (Over-The-Air) channel. These secure elements may also be accessed through the HyperText Transfer Protocol, usually called HTTP or HTTPS for the secure mode. Thus, a distant server can remotely manage the content of a secure element like an UICC (Universal Integrated Circuit Card) through a dedicated communication session using a specific protocol. For example, the server may use the RAM (Remote Applet Management) mechanism as defined by GlobalPlatform ® v 2.2 standard - Amendment B "RAM over HTTP" or the OMA-DM (Open Mobile Alliance - Device Management) protocol as defined by OMA-TS-DM V1.2.1 standard.

A remote server can send a new version or an upgrade of a package application. In this case, the instances linked to the previous package are deleted and a temporary back up of their applicative data is stored in the remote server. Then the new version of the package is installed, new instances are created and populated with applicative data retrieved from the back up area. Such a scheme is a painful task and may lead to data loss. Moreover, the sending of backup data to the server requests a part of bandwidth which may be important due to the huge number of secure elements to be upgraded. Similarly, the applicative data can be simply deleted; new applicative data are generated by the remote server and transmitted to the new instance. In this case also it requires some bandwidth on the server side.

There is a need for allowing an enhanced transfer of applicative data between an instance of an old package and an instance of a new package of an application embedded in a secure element.

### (Summary of the Invention)

An object of the invention is to solve the above mentioned technical problem.

The object of the present invention is a method of transferring applicative data from a first instance of a first package to a second instance of a second package corresponding to an upgraded version of the first package. The first instance stores the applicative data in a first storage format and the second instance stores the applicative data in a second storage format. Said first and second instances are embedded in a secure element. The method comprises the following steps:
- the secure element receives a first command containing a script configured to automatically convert the applicative data from the first storage format into the second storage format,
- when a predefined event occurs, the secure element executes the script, updates the applicative data of the second instance and delete the first instance.

Advantageously, the predefined event may be the receipt of a second command dedicated to re-installation of instance and the second command may contain an identifier of the second instance.

Advantageously, the predefined event may be the receipt of the first command which may be dedicated to update of package and the first command may include both an identifier of the first package and an identifier of the second package.

Advantageously, when the predefined event occurs, the secure element may transfer applicative data of all instances of the first package P1.

Advantageously, the secure element may delete the first package after the transfer of applicative data for all instances of the first package.

Another object of the invention is secure element containing first and second packages, a first instance of the first package and a second instance of the second package. The second package is an upgraded version of the first package. The first instance stores an applicative data in a first storage format and the second instance stores the applicative data in a second storage format. The secure element is configured to receive a first command containing a script configured to automatically convert the applicative data from the first storage format into the second storage format. The secure element comprises an agent configured to launch the execution of the script, to update the applicative data of the second instance and to delete the first instance when a predefined event occurs.

Advantageously, the secure element may comprise a seeker configured to check existence of remaining instance of a given package and to delete a package devoid of remaining instance.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of two instances linked to different packages of a same application according to the invention,
- Figure 2 shows a first example of a flow diagram for transferring applicative data in accordance with one aspect of the invention; and
- Figure 3 shows a diagram of a secure element SE according to an example of the invention.

### (Detailed description of the preferred embodiments)

The invention may apply to any types of secure element intended to embed applications which may be upgraded when deployed on the field. Such secure elements may be coupled to a host machine like a telephone, a vehicle, a meter, a slot machine, a TV or a computer.

In the present description, the word instance means an instance of a software application. The invention applies not only to instances as defined in Java domain but also to separate software (written in non object-oriented programming language) which can run independently.

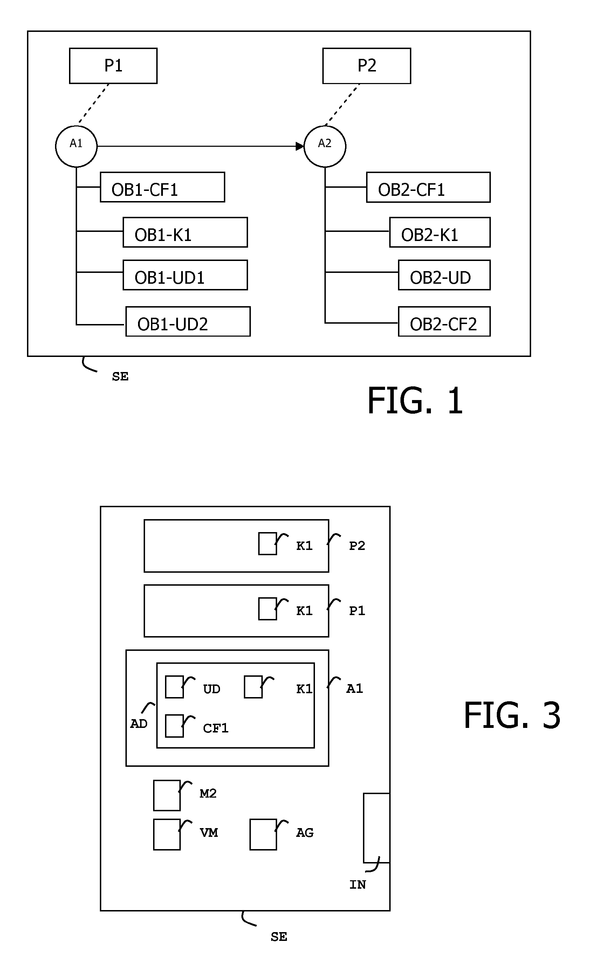

**Figure 1** shows an example of two instances linked to different packages of a same application according to the invention.

In this example, a secure element SE includes a package P1 of an application and an instance A1 of the package P1. The package P1 and the instance A1 are said active, old or current. The instance A1 stores an applicative data which comprises a configuration item CF1 (stored in one object named OB1-CF1), a key K1 (stored in one object named OB1-K1) and a user data UD including two items UD1 (stored in one object named OB1-UD1) and UD2 (stored in one object named OB1-UD2). For instance, the secure element may be a smart card and the application may be a payment service allowing handling secure transactions for payment. The user data UD may comprise the name of the cardholder name, card keys, a card certificate and the card balance. The instance A1 stores the applicative data using its own storage format. Each item may be individually stored in a specific field. Four fields are shown at Figure 1. For instance, each item may be individually stored in a record of a single file. Alternatively, the instance A1 can use multiples files storing each item individually.

The secure element SE includes another package P2 of the same application and an instance A2 of the package P2. The package P2 corresponds to an upgraded version of the package P1. The applicative data of the instance A2 is shown at Figure 1 after the applicative data transfer. In this example, the instance A2 stores the applicative data using four fields. The configuration item CF1 (stored in one object named OB2-CF1), the key K1 (stored in one object named OB2-K1) and the user data UD (stored in one object named OB2-UD) are stored in three different fields. Besides, the instance A2 stores a second configuration item CF2 in an additional field OB2-CF2. This additional field contains data which were not managed by the instance A1 (and by the package P1).

The applicative data may comprise values coming from the user of the secure element, values coming from the entity providing the application and values reflecting the history of the service usage.

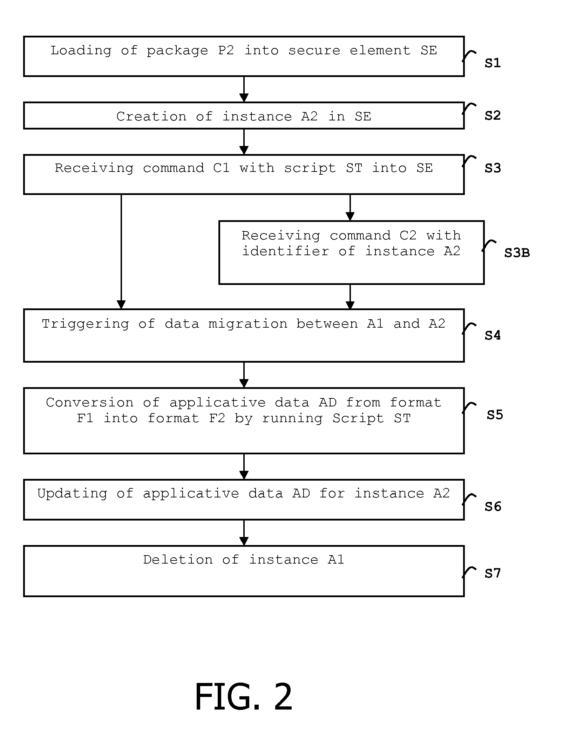

**Figure 2** shows a first example of a flow diagram for transferring applicative data in accordance with one aspect of the invention.

The invention allows transferring applicative data from an instance to another one.

The following example is described based on the assumptions that the secure element SE comprises a JavaCard virtual machine and that the packages P1 and P2 and the associated instances A1 and A2 comply with JavaCard requirements. Although the example is provided with JavaCard technology, the invention also applies to packages and instances developed in other object-oriented languages (like C++ language) and non object-oriented languages (like C language).

Prior to the step S1 of Figure 2, several steps are assumed to have been performed. First an application package P1 is installed into the secure element SE (ex: using the "Install for Load" command of defined by GlobalPlatform ® Card Specifications version 2.x standard) and the instance A1 is created from the package P1 into the secure element SE. The instance is personalized with applicative elements partly depending on the user of the secure element SE. For example, these applicative elements can include cardholder information. The instance A1 allows the user to get access to a service corresponding to the application. Then a second package P2 is developed. The package P2 provides some additional features compared to the first package P1. (Or some bug fixing)

At step S1 of Figure 2, the package P2 is loaded into the secure element SE. This loading may be performed through OTA mechanisms or HTTP. At step S2, the instance A2 is created from the package P2 in the secure element SE. This creation may be requested by a remote server via a dedicated command or launched by any specific event. The instance A2 is intended to replace the instance A1.

At step S3, the secure element received a command C1 which contains a script ST. The script is configured to transfer the applicative data from the storage format F1 used by the instance A1 to the storage format F2 used by the instance A2.

The command C1 is dedicated to update of package. For instance, the command C1 may be named "Install For Update" and have three parameters: the identifier of the current package to be replaced, the identifier of the new package and the script ST.

In a first embodiment, at step S4, the migration of applicative data between instances A1 and A2 is triggered automatically after the receipt of the command C1.

Then at step S5, the secure element SE executes the script ST for converting the applicative data AD. Advantageously, the script is written in Java Card language and run by the JavaCard virtual machine of the secure element SE.

During the execution of the script the internal JavaCard structure like Applet Registry and Package registry are modified. For instance, the tree of objects of the application (e.g. applet) may be changed either for the objects or for the links between objects.

At step S6, the secure element SE transfers the applicative data by updating the applicative data AD of the instance A2. The step S6 may be carried out by the execution of the script ST.

Advantageously, both steps S5 and S6 may be merged and performed as a unique step.

At step S7, the instance A1 is deleted and the instance A2 becomes the current instance for the application. In other words, the instance A2 has replaced the instance A1.

Advantageously, a checking step may be carried out to detect other instances still linked to the package P1. If there is no remaining instance created from the package P1, the package P1 may be deleted.

In a second embodiment, a step S3B is performed just after the step S3. In this case the secure element SE receives a second command C2 containing an identifier of the instance A2. The receipt of the second command CE triggers the migration of applicative date between instances A1 and A2 and the method goes on at step S4.

The command C2 may be dedicated to re-installation of instance. For instance, the command C2 may be named "Install For Reinstall" and have three parameters: the identifier of the new package, the identifier of new application and the identifier of new instance.

Advantageously, some applicative data can be customized in a further step using the "Install for Perso" command of GlobalPlatform standard.

Advantageously, a step S8 (not shown) may be performed after the steps S7. The step S8 corresponds to the creation of alias between the identifiers of instances A1 and A2 so that a call to instance A1 is now routed to the instance A2. Thus replacing the instance is made transparent to the rest of the system.

Alternatively, the script ST may be written in Python, Pearl or any relevant language and the secure element SE comprises an engine able to run such a script. In another example, the script ST may be written in "C Sharp" (c#) and the secure element SE comprises an engine compliant with .Net.

**Figure 3** shows a diagram of a secure element SE according to an example of the invention.

The secure element SE includes two packages P1 and P2 of an application. The package P2 is assumed to be an upgraded version of the package P1.The packages P1 and P2 contain the secret key K1 which is needed for accessing the services of the application. The secure element SE contains an instance A1 created from the package P1. The instance A1 stores applicative data AD like a secret key K1, a configuration value CF1 and a user data UD. In this example, the secure element is a smart card comprising a communication interface IN configured to exchange data with the outside according to IS07816 standards.

The secure element comprises a Java virtual machine VM, an agent AG and a seeker M2. The agent AG is configured to launch the execution of the script ST, to update the applicative data AD of the new instance and to delete the old instance when a predefined event occurs. The agent AG is also configured to create an alias from the identifier of the old instance to the identifier of the new instance. The agent AG may be configured to acts for the following predefined events: receipt of a command dedicated to the full update of a targeted package or receipt of a command dedicated to the re-installation of a targeted instance. When the agent AG is triggered by the receipt of the command dedicated to the full update of a targeted package, the agent AG manage the transfer of applicative data for all existing instances created from the targeted package.

The seeker M2 is configured to check existence of remaining instance of an old package and to delete an old package devoid of remaining instance.

The secure element may be owned and deployed by a secure element issuer. The issuer of the secure element hosting the application can be a bank (e.g. for a MicroSD secure element), a mobile network operator, (e.g. for a UICC or SIM secure element) or a handset manufacturer (for an embedded secure element). The application may be a payment service designed by a secure software provider (or package provider) which develops the package P1. For example, the package provider may be a multinational financial services corporation (like VISA ©). A service provider may get a license from both the secure element issuer and the package provider for creating an instance of the application. For example the service provider may be a bank. Thus a user of the secure element may access the payment service thanks to the instance of the application.

Then the package provider can design a new version of the application by developing a new package. The issuer or the service provider can load the new package into the secure element, create a new instance and activate the applicative data migration from the previous instance to the new instance according to the invention. After the applicative data transfer, the issuer or the service provider can delete both the old instance and the old package. Additionally, the issuer may create an alias between the old instance and the new one if needed.

An advantage of the invention is to avoid the sending of applicative data outside the secure element when an upgrade of application occurs. Since the applicative data remains in the secure element, the invention offers the advantage of avoiding the attacks during the transport of applicative data over the network. This increases the security of the applicative data.

Thanks to the invention the issuer or the service provider can easily and smoothly manage the migration of existing instances, without regenerating and transmitting new applicative data, but by reusing applicative data already present inside the secure element instances. This offers faster time-to-market for deployment of new features and bug fixing version.

Thanks to the invention, the local data transfer method within the secure element allows to simplify (through means embedded into the secure element, and locally to the secure element) the migration process of existing applicative data from one old application instance to one new (with new functionalities and / or bug corrections) application instance. This avoids regeneration and retransmission of said applicative data by the service provider.

An advantage of the invention is to save communication performance and associated costs: communication speed, remote server computing power.

An advantage of the invention is to decrease operational risks like loss of data, data corruption during transmission, transmission failure or temporary storage.

An advantage of the invention is to decrease security risk, in particular all risks linked to the transmission of secure data between an instance within a secure element and a remote server.

An advantage of the invention is to limit the application-related requirements at server side for the generation of a new set of applicative data.

The invention is not limited to application in banking domain and may manage all kinds of application in any domains.

The invention is not limited to a secure element of JavaCard type and may apply to any kinds of secure element able to manage application through a package and an instance.

Thanks to the invention, migration of applicative data of already deployed applications may be safely managed.

## Claims

1. A **method** for transferring applicative data (AD) from a first instance (A1) of a first package (P1) to a second instance (A2) of a second package (P2) corresponding to an upgraded version of said first package (P1), said first instance (A1) storing the applicative data (AD) in a first storage format (F1), said second instance (A2) storing the applicative data (AD) in a second storage format (F2), said first and second instances (A1, A2) being embedded in a secure element (SE),
**characterized in that** said method comprises the following steps:
- the secure element (SE) receives a first command (C1) containing a script (ST) configured to automatically convert the applicative data (AD) from the first storage format (F1) into the second storage format (F2),
- when a predefined event occurs, the secure element (SE) executes the script (ST), updates the applicative data (AD) of the second instance (A2) and delete the first instance (A1).

2. A method according to claim 1, wherein the predefined event is the receipt of a second command (C2) dedicated to re-installation of instance and wherein said second command (C2) contains an identifier of said second instance (A2).

3. A method according to claim 1, wherein the predefined event is the receipt of the first command (C1) dedicated to update of package and wherein said first command (C1) includes both an identifier of said first package (P1) and an identifier of said second package (P2).

4. A method according to claim 3, wherein when the predefined event occurs, the secure element (SE) transfers applicative data of all instances of the first package (P1).

5. A method according to claim 4, wherein the secure element (SE) deletes the first package (P1) after the transfer of applicative data for all instances of the first package (P1).

6. A **secure element** (SE) containing first and second packages (P1, P2), a first instance (A1) of said first package (P1) and a second instance (A2) of said second package (P2), said second package (P2) corresponding to an upgraded version of said first package (P1), said first instance (A1) storing an applicative data (AD) in a first storage format, said second instance (A2) storing the applicative data (AD) in a second storage format (F2),
**characterized in that** the secure element (SE) is configured to receive a first command (C1) containing a script (ST) configured to automatically convert the applicative data (AD) from the first storage format (F1) into the second storage format (F2), and **in that** the secure element (SE) comprises an agent (AG) configured to launch the execution of the script (ST), to update the applicative data (AD) of the second instance (A2) and to delete the first instance (A1) when a predefined event occurs.

7. A secure element according to claim 6 wherein the secure element (SE) comprises a seeker (M2) configured to check existence of remaining instance of a given package and to delete a package devoid of remaining instance.
